# EUROPÄISCHE PATENTSCHRIFT

(11) **EP 1 469 729 B1**
(45) Veröffentlichungstag und Bekanntmachung des Hinweises auf die Patenterteilung: **21.10.2015**
(21) Anmeldenummer: 03701520.3
(22) Anmeldetag: 16.01.2003
(51) Int. Cl.: A01N 33/08, A01N 39/00, A01N 33/12, A01N 33/04

(54) **VIRUZIDE DESINFEKTIONSMITTEL**
VIRUCIDAL DISINFECTANT
AGENT DESINFECTANT VIRUCIDE

(30) Priorität: 18.01.2002 EP 02001329; 23.01.2002 US 349994 P
(43) Veröffentlichungstag der Anmeldung: 27.10.2004
(73) Patentinhaber: Lonza AG, 4052 Basel (CH)
(72) Erfinder: LICHTENBERG, Florian, 79639 Grenzach-Wyhlen (DE); LÜTZELER, Michael, 79639 Grenzach-Wyhlen (DE); RANFT, Volker, 79730 Murg (DE)
(86) Internationale Anmeldenummer: PCT/EP2003/000378
(87) Internationale Veröffentlichungsnummer: WO 2003/059062

(56) Entgegenhaltungen:
- EP-A- 0 799 570
- EP-A- 0 848 907
- WO-A-94/22305
- WO-A-97/02028
- WO-A-98/20732
- WO-A-99/15012
- S.S.BLOCK: "Disinfection, Sterilization and Preservation" 1991 , LEA & FEBIGER , PHILADELPHIA, US XP002239618 Chapter 25: H.N.Prince et al.: PRINCIPLES OF VIRAL CONTROL AND TRANSMISSION Seite 412, Spalte 1, Absatz 2 Seite 413; Tabellen 25-2 Seite 414; Tabelle 25 Seite 415, Spalte 2, Absatz 2 -Seite 416, Spalte 1, Absatz 3
- DATABASE WPI Section Ch, Week 199946 Derwent Publications Ltd., London, GB; Class A97, AN 1999-541231 XP002190404 & CN 1 222 566 A (CHEN Y), 14. Juli 1999 (1999-07-14)
- DATABASE WPI Section Ch, Week 199824 Derwent Publications Ltd., London, GB; Class D22, AN 1998-266961 XP002190405 & JP 10 087410 A (KANTO KAGAKU KK), 7. April 1998 (1998-04-07)
- DATABASE CA [Online] CHEMICAL ABSTRACTS SERVICE, COLUMBUS, OHIO, US; retrieved from STN-INTERNATIONAL Database accession no. 134:168324 ca XP002190403 & CN 1 258 448 A (FAMING ZHUANLI SHENGING GONGKAI SHUOMINGSHU) 5. Juli 2000 (2000-07-05)

## Beschreibung

Die Erfindung betrifft die Verwendung von synergistischen Desinfektionsmittelzusammensetzungen auf Basis von quartären Ammoniumsalzen als viruzide Mittel, insbesondere gegen Polioviren.

Es sind zahlreiche Desinfektions- und Konservierungsmittelzusammensetzungen auf Basis von Aminen und/oder quartären Ammoniumsalzen bekannt. Diese weisen jedoch im allgemeinen, insbesondere bei höheren Verdünnungen, eine unbefriedigende Wirksamkeit gegen Pilze wie z. B. *Aspergillus niger* und Viren (insbesondere gegen hochresistente Viren wie z. B. Polioviren) auf.

Aufgabe der vorliegenden Erfindung war daher die Bereitstellung von Desinfektionsmittelzusammensetzungen auf Basis von quartären Ammoniumsalzen, welche auch bei hoher Verdünnung eine gute Wirksamkeit gegen Viren aufweisen.

Erfindungsgemäss wird diese Aufgabe durch die Verwendung nach Patentanspruch 1 gelöst.

Die ältere Anmeldung PCT/EP 01/10754 (publiziert als WO 02/23990 A1) beschreibt Desinfektionsmittelzusammensetzungen auf Basis von Aminen und/oder quartären Ammoniumsalzen und Alkanolaminen und deren fungizide Eigenschaften.

Es wurde nun überraschend gefunden, dass solche Desinfektionsmittelzusammensetzungen auch ausgeprägte viruzide Eigenschaften und insbesondere auch eine gute Wirksamkeit gegen hochresistente Viren wie Polioviren aufweisen. Ebenfalls wirksam sind sie gegen andere Picornaviren wie beispielsweise ECHO-Viren oder entsprechende tierpathogene Viren wie ECBO-Viren sowie gegen Parvoviren wie beispielsweise Canine Parvovirus

WO9915012 beschreibt ein viruzides Desinfektionsmittel, enhaltend ein Aldehyd, ein Alkanolamin sowie einen ergänzenden Benzalkoniumchlorid-Zusatz.

WO9422305 beschreibt ein viruzides Desinfektionsmittel mit pH 10-12, enthaltend quartäre Ammoniumsalze und basische Zusätze wie Alkalihydroxide/carbonate. WO9820732 beschreibt mycobakterizide Desinfektionsmittel mit pH 6-12, enthaltend quartäre Amoniumsalze und als basische Mittel entweder Alkalihydroxide oder Alkanolamine.

Die Zusammensetzungen umfassen quartäre Ammoniumsalze der allgemeinen Formel 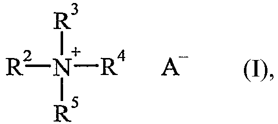 worin
R² C₆₋₁₈-Alkyl
R³ C₁₋₁₈-Alkyl oder -[(CR₂)₂-O]*ₙ*R⁶ mit *n* = 1-20
R⁴ und R⁵ unabhängig voneinander C₁₋₄-Alkyl
R⁶ Wasserstoff oder gegebenenfalls substituiertes Phenyl
und A⁻ ein einwertiges Anion oder ein Äquivalent eines mehrwertigen Anions einer anorganischen oder organischen Säure bedeutet;
und wenigstens ein Alkanolamin der allgemeinen Formel 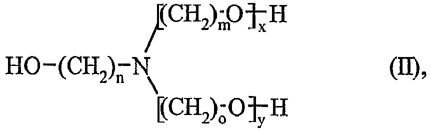 worin n und, soweit vorhanden, m und o unabhängig voneinander den Wert 2 oder 3 und x und y unabhängig voneinander den Wert 0 oder 1 haben, im Massenverhältnis I:II von 20:1 bis 1:20.

Unter Alkyl sind hier und im folgenden jeweils lineare oder verzweigte Alkylgruppen der angegebenen Kohlenstoffzahlen zu verstehen, vorzugsweise jedoch lineare Alkylgruppen und besonders bevorzugt solche mit gerader Zahl von Kohlenstoffatomen. Insbesondere sind hierunter auch die von natürlichen Rohstoffen abgeleiteten Homologengemische wie beispielsweise "Kokosalkyl" zu verstehen.

Unter substituiertem Phenyl sind insbesondere mit einer oder mehreren C₁₋₈-Alkylgruppen und/oder Chloratomen substituierte Phenylgruppen zu verstehen.

Als Anion A⁻ eignen sich grundsätzlich alle anorganischen oder organischen Anionen, insbesondere Halogenid wie beispielsweise Chlorid oder Bromid oder Anionen niedriger

Carbonsäuren wie beispielsweise Acetat, Propionat oder Lactat.

Das quartäre Ammoniumsalz (I) ist vorzugsweise ein Didecyl-dimethylammoniumsalz, Dioctyl-dimethylammoniumsalz, Octyl-decyl-dimethylammoniumsalz, Dikokosalkyl-dimethylammoniumsalz, Kokosalkyl-dimethyl-poly(oxyethyl)ammoniumsalz, Dikokosalkyl-methyl-poly(oxyethyl)ammoniumsalz, Decyl-dimethyl-poly(oxyethyl)ammoniumsalz, Didecyl-methyl-poly(oxyethyl)ammoniumsalz, Octyl-dimethyl-poly(oxyethyl)ammoniumsalz, Dioctyl-methyl-poly(oxyethyl)ammoniumsalz, oder ein Gemisch von zweien oder mehreren dieser Verbindungen. Besonders gute Ergebnisse wurden mit Didecyl-dimethylammoniumsalzen erzielt.

Als Alkanolamine (II) eignen sich grundsätzliche alle Ethanol- und Propanolamine, insbesondere Monoethanolamin, Diethanolamin, Triethanolamin und 3-Amino-1-propanol. Es liegt selbstverständlich auch im Rahmen der Erfindung, Gemische der genannten Verbindungen einzusetzen. Besonders gute Ergebnisse wurden mit den Verbindungen mit primärer Aminogruppe erhalten, nämlich mit Monoethanolamin und 3-Amino-1-propanol. Das Massenverhältnis von quartärem Ammoniumsalz (I) zu Alkanolamin (II) liegt vorzugsweise im Bereich von 1:5 bis 5:1.

Die erfindungsgemäss verwendeten Desinfektionsmittelzusammensetzungen enthalten vorzugsweise Wasser als Lösungsmittel, gegebenenfalls in Kombination mit einem organischen Lösungsmittel.

Vorzugsweise enthalten die erfindungsgemäss verwendeten Desinfektionsmittelzusammensetzungen noch einen oder mehrere Hilfsstoffe aus der Gruppe bestehend aus organischen Lösungsmitteln, Tensiden, Komplexbildnern, Duftstoffen und Farbstoffen.

Eine bevorzugte Verwendung der Desinfektionsmittelzusammensetzungen ist die Flächen-und Instrumentendesinfektion.

Weitere bevorzugte Verwendungsgebiete sind die Wäschedesinfektion und die Händedesinfektion.

Eine weitere bevorzugte Verwendung der Desinfektionsmittelzusammensetzungen ist der Einsatz in chemischen Toiletten wie beispielsweise an Bord von Flugzeugen und Fahrzeugen.

Die folgenden Beispiele verdeutlichen die Ausführung der Erfindung, ohne dass darin eine Beschränkung auf die beschriebenen Ausführungsformen zu sehen ist. Alle Mengenangaben sind, soweit nicht anders angegeben, in Massen-%. Als Testkeim wurde jeweils *Aspergillus niger* ATCC 16404 eingesetzt. Die Wirksamkeit wurde, soweit nichts anderes angegeben ist, nach dem in CEN 1275 spezifizierten Verfahren bestimmt.

### Beispiel 1

### (Vergleichsbeispiel, nicht unter den Umfang der Erfindung fallend)

Es wurde eine Desinfektionsreinigerformulierung (Konzentrat) hergestellt aus:
5,0% Didecyldimethylammoniumchlorid (50%ige Lösung)
2,0% *N,N*-Bis(3-aminopropyl)dodecylamin
5,0% Monoethanolamin
5,0% Genapol^{®} T250 (Talgfettalkoholpolyglycolether, 25 mol Ethylenoxid)
0,5% Natriummetasilicat
0,5% Natriumcarbonat
2,0% Methylglycindiessigsäure-Trinatriumsalz (Trilon^{®} M; 40%ige Lösung) Wasser ad 100%

Die Wirksamkeit wurde mit einer Verdünnung (1 Teil Konzentrat, 99 Teile Wasser) bei 20 °C und 15 min Kontaktzeit bestimmt. Der dekadische Logarithmus der Keimzahlreduktion war 4,1.

### Vergleichsbeispiel 1

Es wurde wie in Beispiel 1 verfahren, jedoch mit dem Unterschied, dass das Monoethanolamin durch die gleiche Menge Wasser ersetzt wurde. Unter den gleichen Testbedingungen war die Formulierung praktisch unwirksam.

### Beispiel 2

### (Vergleichsbeispiel, nicht unter den Umfang der Erfindung fallend)

Es wurde eine Desinfektionsmittelformulierung (Konzentrat) hergestellt aus:

| | |
|---|---|
| 4,9% | *N,N-*Bis(3-aminopropyl)dodecylamin |
| 4,0% | Monoethanolamin |
| 2,0% | Genapol^{®} T250 (Talgfettalkoholpolyglycolether, 25 mol Ethylenoxid) |
| 5,0% | Hostapur^{®} SAS 30 (C₁₃₋₁₇ sekundäre *n*-Alkansulfonsäure, Natriumsalz) |
| 2,0% | Ethylendiamintetraessigsäure-Tetranatriumsalz (40%ige Lösung) |
| 0,7% | Ethylendiamintetraessigsäure Wasser ad 100% |

Die Wirksamkeit wurde mit einer Verdünnung (1 Teil Konzentrat, 199 Teile Wasser) bei 20 °C und 15 min Kontaktzeit bestimmt. Der dekadische Logarithmus der Keimzahlreduktion war 4,3.

### Beispiel 3

### (Vergleichsbeispiel, nicht unter den Umfang der Erfindung fallend)

Es wurde eine Desinfektionsmittelformulierung (Konzentrat) hergestellt aus:

| | |
|---|---|
| 4,2% | *N,N*-Bis(3-aminopropyl)dodecylamin |
| 2,0% | Didecyl-methyl-poly(oxyethyl)ammoniumpropionat (BARDAP 26) |
| 4,0% | Monoethanolamin |
| 2,0% | Genapol^{®} T250 (Talgfettalkoholpolyglycolether, 25 mol Ethylenoxid) |
| 5,0% | Hostapur^{®} SAS 30 (C₁₃₋₁₇ sekundäre *n*-Alkansulfonsäure, Natriumsalz) |
| 2,0% | Ethylendiamintetraessigsäure-Tetranatriumsalz (40%ige Lösung) |
| 0,7% | Ethylendiamintetraessigsäure |
| 4,0% | Butyldiglycol Wasser ad 100% |

Die Wirksamkeit wurde mit einer Verdünnung (1 Teil Konzentrat, 199 Teile Wasser) bei 20 °C und 15 min Kontaktzeit bestimmt. Der dekadische Logarithmus der Keimzahlreduktion war >4,4.

Zusätzlich wurde die Wirksamkeit noch nach dem in CEN 1650 spezifizierten Verfahren bei einer Kontaktzeit von 15 min, einer Konzentration von 1,0%, einer Wasserhärte von 30 °fH und einer organischen Belastung von 0,3% Albumin bestimmt. Der dekadische Logarithmus der Keimzahlreduktion war >4,4.

### Beispiele 4-19

### (Vergleichsbeispiele, nicht unter den Umfang der Erfindung fallend)

Es wurden wässrige Lösungen aus 0,5% Alkanolamin (II) und 0,25% Amin bzw. quartäres Ammoniumsalz (Ia/Ib) hergestellt und nach dem in CEN 1275 spezifizierten Verfahren gestestet. Die Ergebnisse sind in der folgenden Tabelle 1 zusammengefasst.

**Tabelle 1**

| **Beispiel Nr.** | **Amin/Ammoniumsalz** | **Alkanolamin** | **log₁₀ Keimreduktion** |
|---|---|---|---|
| 4 | Dimethyl-dioctyl-ammoniumchlorid | Monoethanolamin | 4,3 |
| 5 | dto. | Diethanolamin | 4,0 |
| 6 | dto. | Triethanolamin | 3,6 |
| 7 | dto. | 3-Amino-1-propanol | 4,2 |
| 8 | Didecyl-dimethylammoniumchlorid | Monoethanolamin | 4,0 |
| 9 | dto. | Diethanolamin | 3,8 |
| 10 | dto. | Triethanolamin | 3,1 |
| 11 | dto. | 3-Amino-1-propanol | 4,0 |
| 12 | Di-C₈₋₁₀-alkyldimethyl-ammoniumchlorid (60%) / C₁₂₋₁₆-Alkyl-benzyl-di-methylammoniumchlorid (40%); Bardac^{®} 205-M | Monoethanolamin | 3,9 |
| 13 | dto. | Diethanolamin | 3,2 |
| 14 | dto. | Triethanolamin | 2,8 |
| 15 | dto. | 3-Amino-1-propanol | 3,8 |
| 16 | *N,N*-Bis(3-aminopropyl)-dodecylamin | Monoethanolamin | 2,9 |
| 17 | dto. | Diethanolamin | 2,7 |
| 18 | dto. | Triethanolamin | 2,4 |
| 19 | dto. | 3-Amino-1-propanol | 2,8 |

Zum Vergleich wurden alle in Tabelle 1 aufgeführten Verbindungen als Einzelsubstanzen in 0,5%iger Lösung getestet. Keine dieser Verbindungen wies eine ausgeprägte fungizide Wirkung auf (log₁₀ Keimreduktion <2).

### Beispiel 20

Es wurde eine Desinfektionsmittelformulierung (Konzentrat) hergestellt aus:

| | |
|---|---|
| 9,9% | Didecyl-dimethylammoniumchlorid (70%ige Lösung) |
| 8,0% | Monoethanolamin |
| 5,0% | Genapol^{®} T250 (Talgfettalkoholpolyglycolether, 25 mol Ethylenoxid) |
| 5,0% | Kaliumcarbonat (wasserfrei) |
| 6,0% | Ethylendiamintetraessigsäure-Tetranatriumsalz (Trilon^{®} B; 40%ige Lösung) Wasser ad 100% |

### Beispiel 21

Das in Beispiel 20 beschriebene Konzentrat wurde in 6%iger Verdünnung m Suspensionsversuch mit einer Einwirkzeit von 30,60 und 120 Minuten auf Wirksamkeit gegen Poliovirus Typ 1 (Stamm Mahoney) geprüft.

### Testmethode:

Die Prüfung erfolgte in Anlehnung an die "Richtlinie des Bundesgesundheitsamtes und der Deutschen Vereinigung zur Bekämpfung der Viruskrankheiten zur Prüfung von chemischen Desinfektionsmitteln auf Wirksamkeit gegen Viren" (Bundesgesundheitsbl. 1982, 25, 397). Als Wachstumsmedium zur Vermehrung der Vero-Zellkulturen diente "Dulbecco's Modified Eagle's Medium", dem 10% fetales Kälberserum und 10 U/ml Penicillin sowie 10 µg/ml Streptomycin zugegeben war. Nach Inokulation der Gewebekultur mit Polio-Virus enthielt das Gewebekulturmedium nur noch 3% fetales Kälberserum. Nach fast vollständiger Ablösung Polio-infizierter Zellen wurde die Virussuspension durch Abzentrifugieren von Zellen und Zellbestandteilen (3000×g, 15 min) gereinigt. Da das Medium der Zellkultur 3% fetales Kälberserum enthielt, war auch bei der Desinfektionsmittelprüfung auch in den Testansätzen mit bidestilliertem Wasser eine geringe Eiweissbelastung vorhanden.

Zur Desinfektionsmittelprüfung wurde 1 Teil der Virussuspension mit 8 Teilen einer 7,5%igen Verdünnung des Desinfektionsmittelkonzentrats (entsprechend einer Endkonzentration von 6%) und jeweils 1 Teil Aqua bidest. oder 2%igem Serumalbumin oder fetalem Kälberserum gemischt und für 30, 60 und 120 min bei 20 °C inkubiert. Dann wurde die Wirkung des Desinfektionsmittels durch 100fache Verdünnung mit kaltem Medium, das kein fetales Kälberserum enthielt, gestoppt. Mit jeweils 1 ml dieser Verdünnung (entsprechend einer Verdünnung der Virussuspension auf 10⁻³) und weiteren dekadischen Verdünnungsstufen wurden jeweils 2 Schälchen von Multiwellplatten mit 6 Vertiefungen (Becton Dickinson Labware, Lincoln Park, NJ, Typ Falcon™ 353046), die einen dichten Zellrasen von Vero-Zellen enthielten, inokuliert. Nach 1 h Adsorptionszeit bei Raumtemperatur wurde die überstehende Flüssigkeit abgesaugt. Dann wurde der Zellrasen der Schälchen mit 2 ml 2%iger, durch Kochen verflüssigter Agarose (Serva high EEO, Kat.-Nr. 11397), die mit doppelt konzentriertem Medium mit 5%igem fetalem Kälberserum im Verhältnis 1:1 gemischt und im Wasserbad auf 40 °C abgekühlt worden war, überschichtet. Nach Erstarren der Agarose bei Raumtemperatur wurden die Platten bei 37 °C im CO₂-Brutschrank für 2 Tage inkubiert.

Die Prüfung der Infektiosität der Virussuspension erfolgte im Plaque-Test. Dabei entspricht jedes Areal an zerstörten Zellen einer infektiösen Einheit des Poliovirus. Die Zahl der Plaques zeigt somit die Zahl der in einer bestimmten Verdünnung des Versuchsansatzes vorhandenen infektiösen Viruspartikel an. Die Plaques werden durch Anfärbung mit jeweils 1,0 ml einer Lösung von 0,1% Brilliant Blue R (Sigma, Kat.-Nr. B0149) in einer wässrigen Lösung mit 20% Methanol und 5% Essigsäure für 30 min sichtbar gemacht. Die ungefärbten Plaques heben sich anschliessend vom blau gefärbten Zellrasen deutlich ab. Aus jeweils zwei Ansätzen einer Verdünnung wurde ein Mittelwert der Plaquezahl errechnet.

Als "Viruskontrollen", in denen die Ausgangskonzentration des Virus bestimmt wurde, dienten Ansätze, in denen das Desinfektionsmittel durch das gleiche Volumen bidestilliertes Wasser ersetzt war. Die so ermittelte Viruskonzentration diente als Referenzwert für die Berechnung der virusinaktivierenden Wirkung der getesteten Desinfektionsmittel.

Als "Toxizitätskontrollen" zum Nachweis einer eventuellen Schädigung der Gewebekulturzellen durch das Desinfektionsmittel dienten Ansätze, in denen die Virussuspension durch das gleiche Volumen bidestilliertes Wasser ersetzt war. Diese Ansätze wurden im Verhältnis 1:100 und 1:1000 (entsprechend einer Verdünnung der Virussuspension von 10⁻³ bzw. 10⁻⁴ im Desinfektionsmittel-Testansatz) mit Medium ohne fetales Kälberserum verdünnt. Dann wurden sie wie die Ansätze zum Test der Desinfektionswirkung für 1 h der Gewebekultur zugegeben und dann abgezogen. Nach 2 Tagen Inkubation bei 37 °C wurde durch Anfärbung geprüft, ob der Zellrasen durch das Desinfektionsmittel geschädigt worden war.

Als Hinweis auf die Resistenz des Prüfvirus und zur Vergleichbarkeit mit anderen Untersuchungen wurde eine "Formaldehydkontrolle" mitgeführt. Dazu wurde 1 Teil der Virussuspension mit 4 Teilen phosphatgepufferter Kochsalzlösung (0,1 M; pH 7; "Dulbecco's PBS") gemischt und die gleiche Menge einer 1,4 g Formaldehyd in 100 ml Lösung enthaltenden Formalinlösung (Endkonzentration: 0,7 g HCHO/100 ml) zugegeben. Nach 5,15 und 60 min Einwirkzeit wurde die Wirksamkeit des Formaldehyds wie beim Desinfektionsmitteltest durch eine Verdünnung auf 1:100 gestoppt und die verbliebene Infektiosität des Poliovirus in weiteren dekadischen Verdünnungen im Plaque-Test bestimmt.

### Ergebnisse:

### Kontrollexperimente:

Die "Viruskontrolle" ergab im Ansatz mit bidestilliertem Wasser eine Viruskonzentration von 1,6·10⁸ infektiösen Einheiten/ml, im Ansatz mit Serumalbumin 1,2·10⁸ infektiösen Einheiten/ml und im Ansatz mit fetalem Kälberserum 1,0·10⁸ infektiösen Einheiten/ml.

Die "Toxizitätskontrolle" zeigte nach der Verdünnung des Prüfansatzes auf 1:100 (entsprechend einer Verdünnung der Virussuspension von 10⁻³) eine leichte Schädigung des Zellrasens. Bei einer Verdünnung von 1:1000 war keine Toxizität mehr erkennbar. Somit kann unter den Testbedingungen eine Abnahme der Viruskonzentration unter Desinfektionsmitteleinwirkung bis zu einer Viruskonzentration von 5·10³ infektiöse Einheiten/ml in der Virussuspension (in beiden Schälchen der Verdünnung 10⁻⁴ ist dann kein Plaque mehr sichtbar) verfolgt werden und bei einer Ausgangskonzentration von mindestens 10⁸ infektiösen Viruspartikeln/ml ist eine Abnahme der Viruskonzentration über mindestens 4,5 Zehnerpotenzen beobachtbar. Da die Prüfrichtlinie zum Nachweis der Wirksamkeit eines Desinfektionsmittels nur eine Abnahme der Viruskonzentration um wenigstens 4 Zehnerpotenzen verlangt, ist die Erfüllung dieser Bedingung mit dem gewählten Versuchsansatz überprüfbar.

Im Ansatz mit 0,7%igem Formaldehyd wurde nach 5 min Einwirkzeit eine Viruskonzentration von 1,05·10⁶/ml, nach 15 min 1·10³/mm und nach 60 min ≤5·10²/ml gemessen. Dies sind erwartete Werte, die die Resultate früherer Versuche bestätigen: 0,7%iges Formalin ist normalerweise in der Lage, die Konzentration von Poliovirus innerhalb von 30 min um mehr als 4 Zehnerpotenzen zu reduzieren.

### Wirksamkeit der Desinfektionsmittel gegen Poliovirus:

Nach 30, 60 und 120 min Einwirkung von 6%iger Verdünnung der Desinfektionsmittelzusammensetzung aus Beispiel 20 wurde im Ansatz mit fetalem Kälberserum bei der Virusverdünnung 10⁻⁴ jeweils in beiden Testschälchen kein Plaque mehr beobachtet. Somit ist nach der Desinfektionsmittelbehandlung eine Viruskonzentration von ≤5·10³ infektiöse Einheiten/ml vorhanden. Dieses Ergebnis wurde sowohl bei geringer (Ansatz mit Aqua bidest.) als auch mittlerer (Ansatz mit 2%igem Serumalbumin) und hoher (Ansatz mit fetalem Kälberserum) Eiweissbelastung gefunden. Es war damit im Vergleich zur Kontrollbestimmung ohne Desinfektionsmittel zu einer Abnahme der Viruskonzentration um mindestens 4,5 log₁₀-Stufen bzw. Zehnerpotenzen gekommen.

Damit ist die Wirksamkeitsvoraussetzung für die Registrierung als Instrumentendesinfektionsmittel in der Bundesrepublik Deutschland erfüllt.

### Beispiel 22

### Wirksamkeit gegen ECBO-Viren:

Das in Beispiel 20 beschriebene Konzentrat wurde in Anlehnung an die Richtlinie des (deutschen) Bundesgesundheitsamtes und der Deutschen Vereinigung zur Bekämpfung der Viruskrankheiten e.V. zur Prüfung von chemischen Desinfektionsmitteln auf Wirksamkeit gegen Viren (Bundesgesundheitsbi. 1982, 25, 397-398; Kommentar: Bundesgesundheitsbl. 1983, 26, 413-414) im quantitativen Suspensionsversuch auf seine viruziden Eigenschaften gegenüber dem ECBO-Virus Stamm LCR-4 getestet. Untersucht wurden Verdünnungen von 1,0%, 3,0% und 5,0% des Konzentrats in bidestilliertem Wasser bei Einwirkzeiten von 15, 30, 60 und 120 min.

Die Prüftemperatur betrug 20±1 °C, als Eiweissbelastung wurde fetales Kälberserum (FKS) oder Serumalbumin (bovine serum albumin, BSA) verwendet.

Zur Herstellung der Virussuspension wurden fetale Kälberlungenzellen (FKL 107) in Roux-Flaschen mit Minimum Essential Medium (MEM, Eagle) mit ca. 10 PBE (Plaque bildende Einheiten) des Virus (erhalten von Dr. W. Herbst, Institut für Hygiene und Infektionskrankheiten der Tiere an der Justus-Liebig-Universität in Giessen) pro Zelle infiziert und nach Erscheinen des cytopathischen Effekts (ca. 12 h) einem dreifachen Einfrier-/Auftauvorgang unterworfen. Es folgte eine Zentrifugation bei 770 × g für 10 min, welche die Virussuspension als Überstand lieferte.

Zur Herstellung der Inaktivierungsansätze wurden 8 Volumenteile des Desinfektionsmittels in der 1,25fachen gewünschten Konzentration mit Virussuspension und bidestilliertem Wasser (je 1 Volumenteil) vermischt. Bei den Versuchen mit Eiweissbelastung wurde anstelle des bidestillierten Wassers ein Volumenteil FKS (Flow Laboratories) bzw. 2%ige BSA-Lösung (Behringwerke AG) verwendet.

Die Durchführung der Inaktivierungsversuche erfolgte in geschlossenen Glasröhrchen. Nach den entsprechenden Zeiten wurde Proben entnommen, um die Restinfektiosität zu bestimmen.

Die Bestimmung der Infektiosität erfolgte mit Hilfe der Endverdünnungstitration im Mikroverfahren. Dazu wurden die Proben unmittelbar nach ihrer Entnahme mit Minimum Essential Medium (MEM) verdünnt, wobei als Verdünnungsfaktoren ganzzahlige Potenzen von 10 gewählt wurden. Jeweils 100 µl einer verdünnten Probe wurden in 8 Näpfe einer sterilen Polystyrolplatte mit flachem Boden übergeführt. Dann wurden jeweils 100 µl einer frisch trypsinierten Suspension von KOP-R-Zellen (Ösopharynxgewebe vom Rind, erhalten von Dr. R. Riebe, Bundesforschungsanstalt für Viruskrankheiten der Tiere auf der Insel Riems, Katalog-Nr. RIE 244) zugegeben. Diese Suspension war so eingestellt, dass sich in jedem Napf ca. 10-15 × 10³ Zellen befanden. Danach wurden die Proben bei 37 °C im CO₂-Brutschran (5 Vol% CO₂) inkubiert. Nach 5 bis 7 Tagen wurde nach der Methode von Spearmann-Kärber die infektiöse Dosis (ID₅₀/ml) bestimmt.

Die Beurteilung der viruziden Wirkung erfolgte durch Berechnung des Titerabfalls gegenüber den jeweils parallel (nach der längsten Einwirkzeit) durchgeführten Kontrolltitrationen. Die Differenz wurde als Δlog₁₀ ID₅₀ angegeben.

Für die Bestimmung der Cytotoxizität des Desinfektionsmittels wurden 2 Volumenteile PBS (phosphate buffered saline) mit 8 Volumenteilen der Desinfektionsmittel-Verdünnung (1,25 fache Konzentration) gemischt, entsprechend verdünnt und auf die Zellkulturen gebracht. Die Angabe der cytotoxischen Dosis erfolgte als log₁₀ CD₅₀/ml (in Analogie zum ID₅₀-Wert).

Die Ergebnisse der Inaktivierungsversuche sind in der folgenden Tabelle 2 zusammengefasst, diejenigen der Cytotoxizitätsbestimmung in Tabelle 3.

**Tabelle 2**

| Konzentration | Virusgehalt (Kontrolle) (log₁₀ ID₅₀/ml) | Eiweissbelastung | Abnahme des Infektionstiters (Δlog₁₀ ID₅₀) nach | | | |
|---|---|---|---|---|---|---|
| | | | 15 min | 30 min | 60 min | 120 min |
| 1,0% | 6,85 | - | 1,25 | 1,25 | 1,64 | n.d. |
| 1,0% | 7,05 | 0,2% BSA | 1,00 | 1,25 | 1,34 | n.d. |
| 1,0% | 7,15 | 10,0% FKS | 1,00 | 1,15 | 1,25 | n.d. |
| 3,0% | 7,65 | - | ≥4,15 | ≥4,15 | ≥4,15 | ≥4,15 |
| 3,0% | 7,75 | 0,2% BSA | 3,45 | ≥4,25 | ≥4,25 | ≥4,25 |
| 3,0% | 7,65 | 10,0% FKS | 2,17 | 3,45 | ≥4,15 | ≥4,15 |
| 5,0% | 7,65 | - | ≥4,15 | ≥4,15 | ≥4,15 | ≥4,15 |
| 5,0% | 7,75 | 0,2% BSA | 4,05 | ≥4,25 | ≥4,25 | ≥4,25 |
| 5,0% | 7,65 | 10,0% FKS | 3,15 | ≥4,15 | ≥4,15 | ≥4,15 |

| | | | | | | |
|---|---|---|---|---|---|---|
| n.d. = nicht durchgeführt | | | | | | |

**Tabelle 3**

| Konzentration | Verdünnungsstufe | | | | |
|---|---|---|---|---|---|
| | 10⁻¹ | 10⁻² | 10⁻³ | 10⁻⁴ | 10⁻⁵ |
| 1,0% | + | - | - | - | - |
| 3,0% | + | + | - | - | - |
| 5,0% | + | + | - | - | - |

Die Ergebnisse zeigen, dass die getestete Zusammensetzung (Konzentrat) bei einer Anwendungskonzentration von 3,0% nach 60 min Einwirkzeit und bei 5,0% nach 30 min die in der Richtlinie definierte Wirksamkeit (Δlog₁₀ ID₅₀ ≥ 4,0; entsprechend einer Inaktivierung von ≥99,99%) gegen ECBO-Viren aufweist.

### Beispiel 23

### Wirksamkeit gegen Canine Parvovirus:

Verdünnungen des in Beispiel 20 beschriebenen Konzentrats wurden auf ihre Wirksamkeit gegen Canine Parvovirus Typ 2 (bezogen von Dr. Parrish, Cornell University) in NLFK-Zellen (Norden Lab Feline Kidney) bei 22 °C und 10 min Einwirkzeit getestet. Verdünnungen im Verhältnis 1:35 in entsalztem oder hartem (400 ppm AOAC hard water) Wasser mit 5% organischer Belastung (fetales Kälberserum) zeigten hinreichende viruzide Wirksamkeit.

## Patentansprüche

1. Verwendung einer Desinfektionsmittelzusammensetzung, enthaltend
a) ein quartäres Ammoniumsalz der allgemeinen Formel 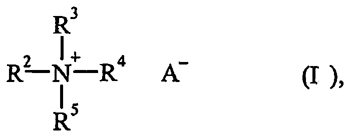 worin
R² C₆₋₁₈-Alkyl,
R³ C₁₋₁₈-Alkyl oder -[(CH₂)₂-O]*ₙ*R⁶ mit *n* = 1-20,
R⁴ und R⁵ unabhängig voneinander C₁₋₄-Alkyl,
R⁶ Wasserstoff oder gegebenenfalls substituiertes Phenyl und A⁻ ein einwertiges Anion oder ein Äquivalent eines mehrwertigen Anions einer anorganischen oder organischen Säure bedeutet; und
b) wenigstens ein Alkanolamin der allgemeinen Formel 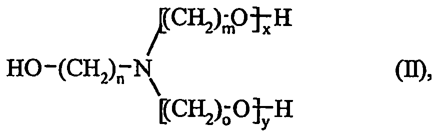 worin n und, soweit vorhanden, m und o unabhängig voneinander den Wert 2 oder 3 und x und y unabhängig voneinander den Wert 0 oder 1 haben;
im Massenverhältnis I:II von 20:1 bis 1:20
als viruzides Mittel.

2. Verwendung nach Anspruch 1, **dadurch gekennzeichnet, dass** das quartäre Ammoniumsalz ausgewählt ist aus der Gruppe bestehend aus Didecyl-dimethylammoniumsalzen, Dioctyl-dimethylammoniumsalzen, Octyl-decyl-dimethylanunoniumsalzen, sowie Gemischen dieser Verbindungen.

3. Verwendung nach Anspruch 1 oder 2, **dadurch gekennzeichnet, dass** das Alkanolamin (II) ausgewählt ist aus der Gruppe bestehend aus Monoethanolamin, Diethanolamin, Triethanolamin und 3-Amino-1-propanol.

4. Verwendung nach einem der Ansprüche 1 bis 3, **dadurch gekennzeichnet, dass** das Massenverhältnis I:II zwischen 1:5 und 5:1 liegt.

5. Verwendung nach einem der Ansprüche 1 bis 4, **dadurch gekennzeichnet, dass** die Desinfektionsmittelzusammensetzung Wasser als Lösungsmittel enthält.

6. Verwendung nach einem der Ansprüche 1 bis 5, **dadurch gekennzeichnet, dass** die Desinfektionsmittelzusammensetzung zusätzlich einen oder mehrere Hilfsstoffe aus der Gruppe bestehend aus organischen Lösungsmitteln, Tensiden, Komplexbildnem, Duftstoffen und Farbstoffen enthält.

7. Verwendung nach einem der Ansprüche 1 bis 6 in der Flächen- und Instrumenten-desinfektion.

8. Verwendung nach einem der Ansprüche 1 bis 6 in der Wäschedesinfektion.

9. Verwendung nach einem der Ansprüche 1 bis 6 in der Händedesinfektion.

10. Verwendung nach einem der Ansprüche 1 bis 6 in chemischen Toiletten.

11. Verwendung nach einem der Ansprüche 1 bis 10 gegen Parvo- oder Picornaviren, insbesondere gegen Polioviren.

## Claims

1. Use of a disinfectant composition containing
a) a quaternary ammonium salt of the general formula 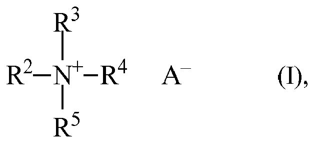
wherein R² is C₆₋₁₈ alkyl
R³ is C₁₋₁₈ alkyl or -[(CH₂)₂-O]*ₙ*R⁶ wherein n = 1-20
R⁴ and R⁵ independently of one another are C₁₋₄-alkyl
R⁶ is hydrogen or optionally substituted phenyl
and A⁻ is a monovalent anion or one equivalent of a polyvalent anion of an inorganic or organic acid; and
b) at least one alkanolamine of the general formula 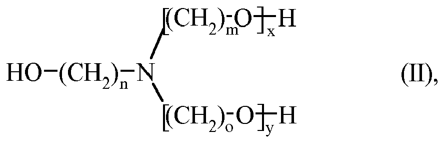
where n and, if present, m and o independently of one another have the value 2 or 3
and x and y independently of one another have the value 0 or 1;
in the mass ratio I:II of 20:1 to 1:20 as virucidal agent.

2. Use according to Claim 1, **characterized in that** the quaternary ammonium salt is selected from the group consisting of didecyldimethylammonium salts, dioctyldimethylammonium salts, octyldecyldimethylammonium salts, and mixtures of these compounds.

3. Use according to Claim 1 or 2, **characterized in that** the alkanolamine (II) is selected from the group consisting of monoethanolamine, diethanolamine, triethanolamine and 3-amino-1-propanol.

4. Use according to one of Claims 1 to 3, **characterized in that** the mass ratio I:II is between 1:5 and 5:1.

5. Use according to one of Claims 1 to 4, **characterized in that** the disinfectant composition contains water as solvent.

6. Use according to one of Claims 1 to 5, **characterized in that** the disinfectant composition additionally contains one or more adjuvants selected from the group consisting of organic solvents, surfactants, complexing agents, fragrances and colorants.

7. Use according to one of Claims 1 to 6 in surface disinfection and instrument disinfection.

8. Use according to one of Claims 1 to 6 in laundry disinfection.

9. Use according to one of Claims 1 to 6 in hand disinfection.

10. Use according to one of Claims 1 to 6 in chemical toilets.

11. Use according to one of Claims 1 to 10 against parvoviruses or picornaviruses, in particular against polioviruses.

## Revendications

1. Utilisation d'une composition de désinfectant, contenant
a) un sel d'ammonium quaternaire de formule générale 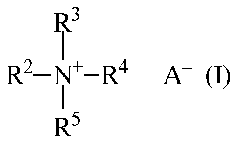 dans laquelle
R² signifie C₆₋₁₈-alkyle,
R³ signifie C₆₋₁₈-alkyle ou -[(CH₂)₂-O]ₙR⁶ avec n = 1-20,
R⁴ et R⁵ signifient, indépendamment l'un de l'autre, C₁₋₄-alkyle,
R⁶ signifie hydrogène ou phényle le cas échéant substitué
et A⁻ signifie un anion monovalent ou un équivalent d'un anion polyvalent d'un acide inorganique ou organique ; et
b) au moins une alcanolamine de formule générale 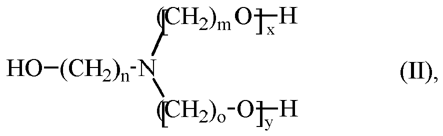 dans laquelle n et, s'ils sont présents, m et o présentent, indépendamment les uns des autres, la valeur 2 ou 3 et x et y présentent, indépendamment l'un de l'autre, la valeur 0 ou 1,
dans un rapport massique I:II de 20:1 à 1:20
comme agent virucide.

2. Utilisation selon la revendication 1, **caractérisée en ce que** le sel d'ammonium quaternaire est choisi dans le groupe constitué par les sels de didécyl-diméthylammonium, les sels de dioctyldiméthylammonium, les sels d'octyldécyl-diméthylammonium ainsi que les mélanges de ces composés.

3. Utilisation selon la revendication 1 ou 2, **caractérisée en ce que** l'alcanolamine (II) est choisie dans le groupe constitué par la monoéthanolamine, la diéthanolamine, la triéthanolamine et le 3-amino-1-propanol.

4. Utilisation selon l'une quelconque des revendications 1 à 3, **caractérisée en ce que** le rapport massique 1:11 est situé entre 1:5 et 5:1.

5. Utilisation selon l'une quelconque des revendications 1 à 4, **caractérisée en ce que** la composition de désinfectant contient de l'eau comme solvant.

6. Utilisation selon l'une quelconque des revendications 1 à 5, **caractérisée en ce que** la composition de désinfectant contient en outre un ou plusieurs adjuvants du groupe constitué par les solvants organiques, les tensioactifs, les complexants, les parfums et les colorants.

7. Utilisation selon l'une quelconque des revendications 1 à 6 dans la désinfection des surfaces et des instruments.

8. Utilisation selon l'une quelconque des revendications 1 à 6 dans la désinfection du linge.

9. Utilisation selon l'une quelconque des revendications 1 à 6 dans la désinfection des mains.

10. Utilisation selon l'une quelconque des revendications 1 à 6 dans les toilettes chimiques.

11. Utilisation selon l'une quelconque des revendications 1 à 10 contre les parvovirus ou les picornavirus, en particulier contre les poliovirus.
